# EUROPEAN PATENT SPECIFICATION

(11) **EP 2 078 324 B1**
(45) Date of publication and mention of the grant of the patent: **15.05.2013**
(21) Application number: 07863735.2
(22) Date of filing: 31.10.2007
(51) Int. Cl.: H01Q 3/24, H01Q 21/28, H04B 7/08

(54) **APPARATUS AND METHOD FOR SENSOR-BASED WIRELESS RECEIVE DIVERSITY**
VORRICHTUNG UND VERFAHREN FÜR SENSORBASIERTE DRAHTLOSE EMPFANGSDIVERSITÄT
APPAREIL ET PROCÉDÉ POUR UNE DIVERSITÉ DE RÉCEPTION SANS FIL BASÉE SUR UN CAPTEUR

(30) Priority: 31.10.2006 US 863631 P
(43) Date of publication of application: 15.07.2009
(73) Proprietor: QUALCOMM Incorporated, San Diego, CA 92121 (US)
(72) Inventor: SHEYNBLAT, Leonid, San Diego, California 92121 (US); ROWITCH, Douglas N., San Diego, California 92121 (US); HESHMATI, Ardalan, San Diego, California 92121 (US)
(74) Representative: Carstens, Dirk Wilhelm
(86) International application number: PCT/US2007/083227
(87) International publication number: WO 2008/055232

(56) References cited:
- EP-A- 1 033 781
- WO-A-01/13530
- WO-A-99/14870
- WO-A-02/097469
- WO-A-2006/011424
- WO-A-2006/062059
- WO-A1-99/27610
- WO-A1-03/085776
- GB-A- 2 423 191
- US-A1- 2002 106 995

## Description

### RELATED APPLICATION

This application claims priority from U.S. Provisional Application 60/863,631, entitled "Sensor-Based GPS Receive Diversity" and filed on October 31, 2006.

### FIELD

This disclosure relates generally to apparatus and methods for receive diversity. In particular, this disclosure relates generally to apparatus and methods for wireless receive diversity.

### BACKGROUND

In wireless communication systems, the strength and direction of the signal sources vary as the wireless unit moves in location.

Most wireless units communicate through electromagnetic radio waves with a cell site base station. The signals from the cell site base station are received through an antenna mounted on the wireless unit.

An antenna on a wireless unit may attempt to approximate an isotropic antenna. A theoretical model of an isotropic antenna radiates and receives power in all directions uniformly. However, a perfect isotropic antenna is not achievable.

Further attention is drawn to the document US 2002106995, which describes a wireless information device that receives and processes a message within a wireless information communication system. The wireless information device includes an antenna system, a radio frequency switch, a controller and a display. The antenna system has a plurality of antennas for receiving the message. The radio frequency switch activates a first antenna of the plurality of antennas as an active antenna in response to an antenna control signal sent from the controller. The antenna control signal is generated by the controller in response to the determination of the display orientation of the display.

Attention is also drawn to the document WO 02097469 which relates to a device and a method for receiving signals emitted from satellites, preferably GPS signals, with an antenna, directed at the satellite and an analytical unit, for processing the received signal, whereby the reception quality of the device is increased independent of the orientation of the antenna. The above is achieved, whereby the analytical unit is additionally connected to one or more antennae arranged in differing reception layers and each of the antennae communicates with the analytical unit, the received signal of which comprises the highest signal level in comparison with the remaining signals received from the antennae, or each of the antennae communicates with the analytical unit, the layer orientation of which is directed towards the satellite.

Also attention is drawn to WO 2006062059 which describes a portable wireless unit capable of ensuring high speed, large capacity communication by lowering the correlation coefficient between antennas under various use states of a user. An antenna element is arranged outside from the upper end of a case on the side opposite to the display section of the case, an antenna element is arranged in parallel with and on the same side of the antenna element while spaced apart in the width direction, and an antenna element is arranged in parallel with the antenna element from the display section side spaced apart from the antenna element in the thickness direction. The antenna element is connected with a transmitter/receiver, and any one of the antenna element is selected by controlling a high frequency switch by angle information from a gravity sensor and connected with the transmitter/receiver. A receiving signal is amplified by receiving circuits through the transmitter/receiver and then separated at a demodulating section thus extracting reception information.

Furthermore attention is drawn to document WO 2006011424, which describes an inventive diversity type receiver apparatus can decide, in accordance with a reception status, any master branch that serves as a reference for achieving coincidence of output timings of symbol synchronizations between signals received by a plurality of branches. This arrangement allows carrier selection or combination by switching the master branch to another branch of an excellent reception even when the reception status of the master branch is significantly degraded during reception, or even when OFDM synchronization cannot be detected due to an inadvertent disconnection or brake of an antenna line on the master side.

Reference is also made to the document GB 2423191. Here an antenna unit, preferably for a mobile communications unit such as a laptop computer, PDA or telephone, is described and has an orientation detector so that a transmission or reception characteristic can be controlled in response to the orientation. The antenna may comprise a set of antennas each having a different orientation so that a particular antenna may be selected to maintain a preferred beam pointing direction. Alternatively a phased array antenna may be used. In addition, detected or calculated velocity or acceleration of the antenna may be used to mitigate for Doppler effects by altering the modulation and coding to alter one or more of: data rate, signal power, modulation mode, codec parameters, error protection scheme or the decoder type. Orientation may be detected using accelerometers, inertial trackers, gyroscopes or tilt switches.

Documents WO 99/27610 and WO 03/085776 describe mobile communication systems with an omnidirectional antenna and directional antennas being switched in response to orientation information from an orientation sensor.

### SUMMARY

In accordance with the present invention, a wireless unit, as set forth in claim 1, and a method for implementing antenna selection, as set forth in claim 14, is provided. Embodiments of the invention are claimed in the dependent claims.

It should be understood that other aspects will become readily apparent to those skilled in the art from the following detailed description, wherein it is shown and described various aspects by way of illustration. The drawings and detailed description are to be regarded as illustrative in nature and not as restrictive.

### BRIEF DESCRIPTION OF THE DRAWINGS

Fig. 1 is an illustration of an antenna gain pattern of an approximately isotropic antenna.

Fig. 2 is an illustration of an approximation of a gain pattern of a hemispherical antenna.

Fig. 3 is an illustration of a one example of a gain pattern of a directional antenna.

Fig. 4 is a block diagram of an aspect of a wireless unit with an inertial sensor and two antennas.

Fig. 5 is a diagram of an inertial sensor, illustrating the orientation of the inertial sensor relative to a horizontal plane.

Fig. 6 is an illustration of another aspect of a wireless unit with diversity reception capability.

Fig. 7 is a block diagram of an aspect of a wireless unit with baseband processing capability.

Fig. 8 is a block diagram of a second aspect of a wireless unit with baseband processing capability.

Fig. 9 is a block diagram of a third aspect of a wireless unit with baseband processing capability.

Fig. 10 is a block diagram of a fourth aspect of a wireless unit with baseband processing capability.

Fig. 11 is a diagram of a generic GPS receiver.

Fig. 12 is a diagram including a table regarding antenna design for GPS and the antenna's effect on performance.

Fig. 13 is a diagram of one implementation of a GPS receive diversity system.

### DETAILED DESCRIPTION

The detailed description set forth below in connection with the appended drawings is intended as a description of various aspects of the present invention and is not intended to represent the only aspects in which the present invention may be practiced. Each aspect described in this disclosure is provided merely as an example or illustration of the present invention, and should not necessarily be construed as preferred or advantageous over other aspects. The detailed description includes specific details for the purpose of providing a thorough understanding of the present invention. However, it will be apparent to those skilled in the art that the present invention may be practiced without these specific details. In some instances, well-known structures and devices are shown in block diagram form in order to avoid obscuring the concepts of the present invention. Acronyms and other descriptive terminology may be used merely for convenience and clarity and are not intended to limit the scope of the invention.

### Overview

The description in this "Overview" section was submitted in U.S. Provisional Application 60/863,631, entitled "Sensor-Based GPS Receive Diversity" and filed on October 31, 2006.

### Overview: Introduction

By using inertial sensors handset orientation can be determined optimizing antenna selection to improve satellite positioning system (SPS) receiver signal sensitivity. In the past, signal reception has been improved by longer integration of the satellite signals.

Including more antennas capable of receiving satellite navigation signals and adding inertial sensors supporting handset orientation determination, provides the means for selecting a hemi-spherical antenna instead of the omni-directional design and can support a method for switching between two antennae to improve satellite receiver sensitivity and enhance the satellite measurement accuracy and availability.

### Factors affecting sensitivity (listed below)

**Physical components (Hardware)**
- Antenna
- RF and analog losses
- Digital implementation losses

**Processing components include: (Software)**
- Integration time
- Availability of assistance data
- Probability of detection, Probability of false alarm, detection thresholds

**Signal blockage (device use pattern)**
- Head and hand signal attenuation
- Buildings and other obstacles

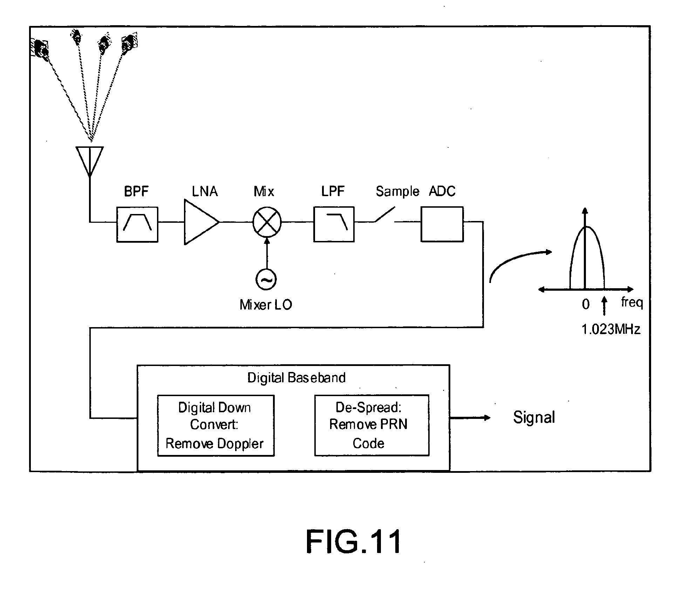

A Generic GPS Receiver is shown in Fig. 11.

### Overview: Antenna Effect

**Transmitted GPS signal is Right Hand Circularly Polarized (RHCP)**

**Antenna receiver polarization and gain pattern are important**
- Mounted antennas have hemi-spherical gain patterns and may be RHCP
- Cell phone antennas generally have omni-directional gain patterns and are generally linearly polarized

**COST will typically dictate cell phone GPS antenna selection**

**Location in cell phone may be sub-optimal for some use models, leading to signal blockage/attenuation**

**Cell phone use model may tend to favor omni-directional and linearly polarized**
- Lose ~3db for omni-directional compared to hemi-spherical
- Lose ~3db for linearly polarized compared to RHCP
• The Antenna can have one of the largest impacts on GPS performance
• As GPS designs are placed into smaller and smaller PDAs and phones, the OEM will tend to reduce cost and size by compromising an the antenna.
• A poor GPS antenna, or poor antenna layout within a PDA/phone design, has a large impact on sensitivity. Assisted GPS can partially compensate, but for the optimum user experience, a good quality antenna is critical

| | **GPS Device Connected to PDA or Phone** | **GPS Sleeve assembly on PDA or Phone** | **Separate GPS chips inside a PDA or phone** | **Integrated GPS within modem for PDA or Phone** |
|---|---|---|---|---|
| **Antenna** | Usually a fairly large antenna | Usually a fairly large antenna | Advise that the OEM use best possible solution | Advise that the OEM use best possible solution |

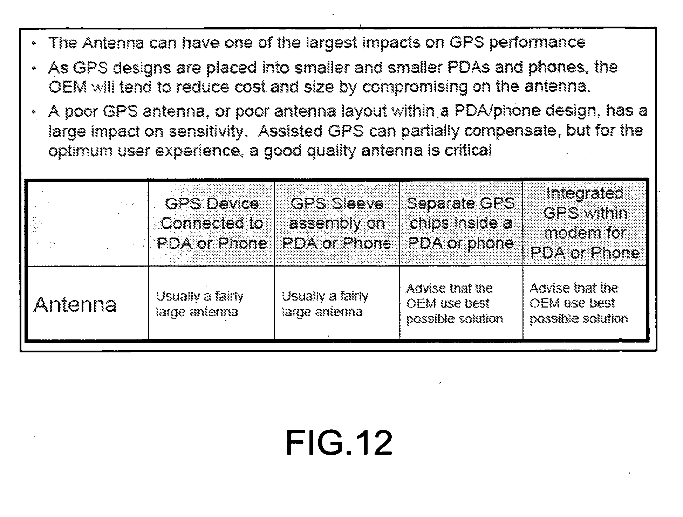

Fig. 12 is a diagram including a table regarding antenna design for GPS and its effect on performance.

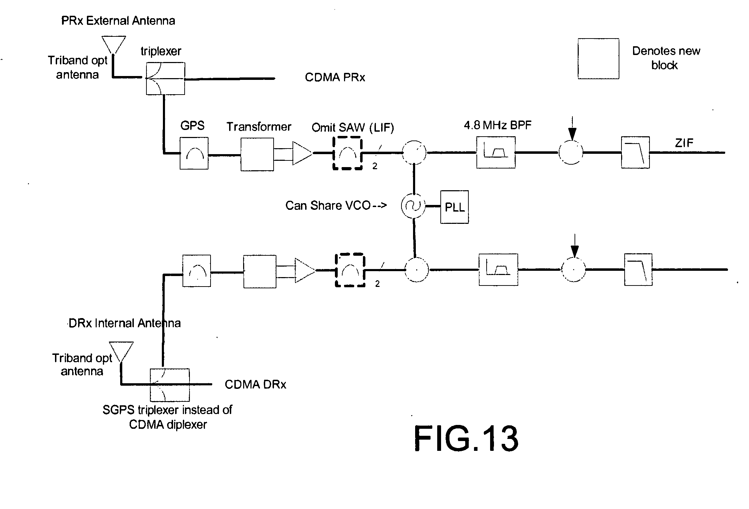

A GPS Receive Diversity Implementation is shown in Fig. 13.

### Overview: GPS diversity sensitivity enhancement

GPS signals are modeled as being received on Gaussian noise limited channel (AGC tracks noise only):
- To achieve sensitivities in the range -159 to -160 dBm requires very long search integrations (on the order of 5-14 seconds)

Since GPS signals don't typically fade, possible in diversity reception to coherently combine, assuming the phase offset between signals from each antenna can be estimated.
- Theoretical gain on AWGN channel: 3 dB

For non-coherent combining:
- Theoretical gain: 1.5 to 2.5 dB
- Gain for shallow search modes ~ 2.5 dB
- Gain for deep search modes (which establish sensitivity) ~ 1.5 dB

### Overview: Sensor-based GPS diversity sensitivity gain

Significant improvements in sensitivity can be had if the incidence of the satellite signals on the antenna is optimized for the reception of either direct or unattenuated signals. For this purpose the orientation and the use of the device can be applied. Sensors, integrated into the device, can be sued to determine device orientation. It may also be useful to determine if the device is held by hand near head or is operated hands-free.

A 3-axis accelerometer can be used as a tilt sensor (see figure above). Strategically placing more than 1 antenna in the device and being able to switch between antennae a 3dB sensitivity improvement can be attained since hemi-spherical antennae can be used instead of omni-directional one.

Using an antenna which is facing up can also provide performance benefit in terms of receiving direct satellite signals vs reflected signals off the ground thus reducing multipath effects.

Similarly, evaluating dynamic profile (with the use of accelerometers), a handset is being carried by a person walking, vs being stationary vs being carried in the automobile can also be used as means for antenna selection or how the signals are mixed when received from multiple antennae.

Similarly, orientation and platform dynamics, can be used as inputs to the navigation algorithms for better signal filtering (Kalman Filter tuning) and applied to other signal processing schemes such as interference cancellation (antenna beam steering).

The method and apparatus described herein may be used with various satellite positioning systems (SPS), such as the United States Global Positioning System (GPS), the Russian Glonass system, the European Galileo system, any system that uses satellites from a combination of satellite systems, or any satellite system developed in the future. Furthermore, the disclosed method and apparatus may be used with positioning determination systems that utilize pseudolites or a combination of satellites and pseudolites.

### Description

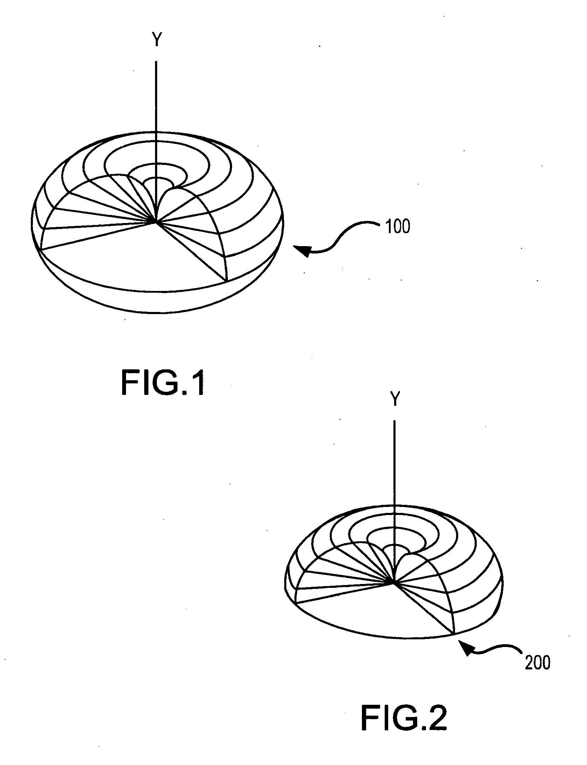

Fig. 1 is an illustration of an antenna gain pattern 100 that is approximately isotropic perpendicular to the central axis. Thus, the approximately isotropic antenna radiates and receives power uniformly in all directions perpendicular to the central axis, but at a reduced antenna gain compared to other more directional antennas.

Fig. 2 shows a hemispherical antenna gain pattern 200. The antenna gain pattern 200 has about a 3dB gain increase over the antenna pattern 100 of the approximately isotropic antenna. The gain increase is at least partly due to the fact that the radiation pattern of the hemispherical gain pattern is substantially confined to the upper hemisphere only.

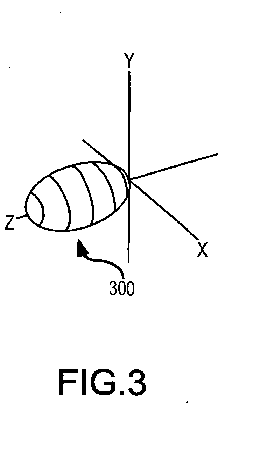

Fig. 3 is an illustration of a directional antenna gain pattern 300. The gain of a directional antenna is greater than that for a hemispherical antenna depending on the directivity of the antenna pattern. Examples of directional antennas include helix antennas, horn antennas, dipole array antennas, patch antennas, and so forth. One skilled in the art would understand that there are many examples of antennas each having respective gain pattern, and that the antenna gain patterns are in some way related to the directivity of the antenna patterns.

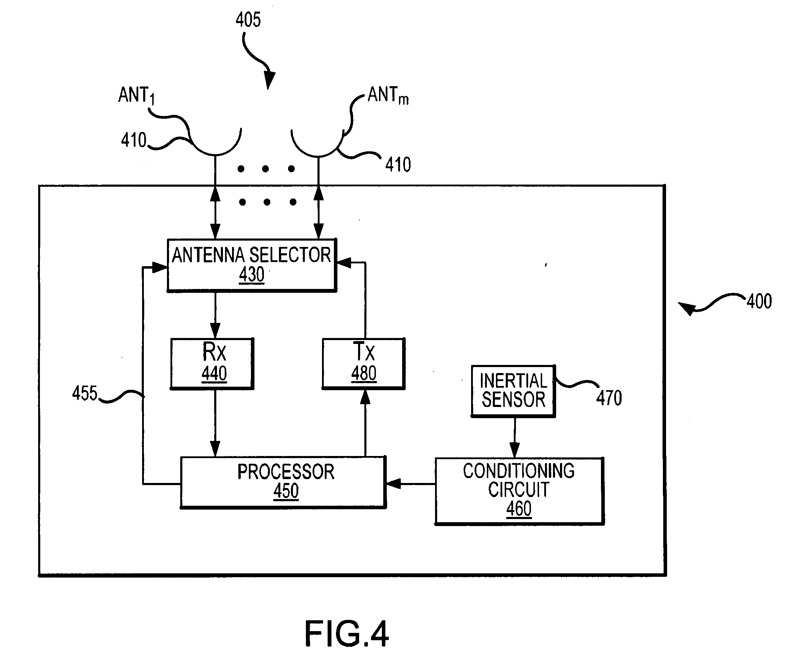

Fig. 4 is a block diagram of an aspect of a wireless unit 400 with an inertial sensor 470 and a plurality of antennas 410. One skilled in the art would understand that the quantity of antennas, as disclosed here, is not confined to a particular quantity, and that the quantity of antennas is chosen based on the particular system parameters.

In one aspect, the plurality of antennas includes at least one dual-polarized antenna. In one example, a dual-polarized antenna has two substantially orthogonal (e.g., horizontal and vertical) polarizations to provide two diversity outputs which are then be fed into a switch, a selector, a combiner or an equivalent. In another aspect, the plurality of antennas reflects the diversity outputs of one or more dual-polarized antennas. One skilled in the art would understand that a single dual-polarized antenna could be the equivalent in spirit to two distinct, spatially separated antennas.

A wireless signal 405 is received by one or more of the antennas 410. The wireless signals may include positioning signals from satellite or terrestrial sources. Examples of satellite sources include GPS, GLONASS, Galileo, COMPASS (Beidou), QZSS and IRNSm. Examples of terrestrial sources include pseudolite systems, AFLT-enabled base stations, and other wireless sources (e.g. access points) whose position is at least approximately known. Additionally, the source of the signals is not limited to positioning, and could include any wireless source, such as but not limited to WiFi, CDMA, and Bluetooth.

In one aspect, the antenna selector 430, based on an antenna selection input 455 from the processor 450, selects one or more from the plurality of antennas to receive the signal 405. The signal 405 received by the selected one or more antenna(s) is then inputted into the receiver unit 440 and then into the processor 450 for processing.

A typical receiver unit may include one or more of the following components for processing the signal 405: a bandpass filter, a low noise amplifier (LNA), a mixer, a local oscillator (LO), a low pass filter, and an analog to digital converter. One skilled in the art would understand that other aspects of a receiver unit are well known and would not change the scope of the present disclosure. In one aspect, a plurality of receivers is implemented with the plurality of antennas wherein the plurality of antennas could be greater in quantity to the plurality of receivers. In another aspect, the plurality of antennas is equal in quantity to the plurality of receivers. In still another aspect, the plurality of receivers refers to the receiver outputs in a multi-channel receiver.

The inertial sensor 470 measures the orientation of the wireless unit 400 in an inertial reference frame, and provides orientation information regarding the sensor's orientation. For example the inertial sensor 470 may comprise a 3-axis accelerometer operating as a tilt sensor that measures the "tilt" from the horizontal plane defined perpendicular to the force of gravity, and provides information regarding the orientation of the sensor with respect to the horizontal plane.

The orientation information, measured by the inertial sensor 470, is then inputted into the processor 450 to generate the antenna selection input. The orientation information measured by the inertial sensor 470 is used to support the antenna selection to improve the chance of finding the desired signal at a desirable signal strength or to improve antenna gain. For example, if the orientation of the wireless unit is known, that orientation information is used to select the appropriate antenna(s), and the selected antenna(s) with higher gain can be directed to receive the desired signal in its direct path and reduce multipath effect.

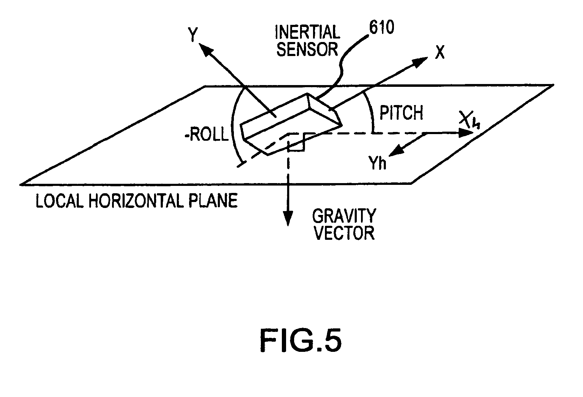

Fig. 5 illustrates the geometry of an inertial sensor 610 relative to a horizontal plane. The orthogonal axis system (X-Y) of the inertial sensor 610 is compared with the orthogonal axis system (Xₕ-Yₕ) of the horizontal plane to determine the orientation of the inertial sensor 610 relative to the horizontal plane.

Examples of inertial sensors include accelerometers, quartz sensors, gyros, and so forth. The orientation of the wireless unit 400 can be used to make an appropriate selection between the antennas 410. In one example where two antennas are implemented, one antenna is an approximately isotropic antenna and the other antenna is an approximately hemispheric antenna. If the wireless unit 400 is in communication with base stations surrounding its geographical location, the approximately isotropic antenna may be selected because the antenna gain pattern of an isotropic antenna allows for uniform radiation in all directions. However, if the wireless unit 400 is in receipt of signals from the Global Navigational Satellite System (GNSS), and the antennas of wireless unit 400 are oriented toward the GNSS satellites as determined by the inertial sensor 470, the antenna selector 430 may be directed by the processor 450 to select the hemispheric antenna to take advantage of higher antenna gain. One skilled in the art would understand that signals from GNSS satellites include but arc not confined to signals from GPS satellites, and/or satellites from any other satellite system, including but not limited to, GLONASS, Galileo, COMPASS (Beidou), QZSS and IRNS. Additionally, one skilled in the art would understand that the source of the signals is not limited to GNSS and could include any wireless source, such as but not limited to, pseudolite systems, WiFi, CDMA, and Bluetooth.

In another example where two antennas are implemented, assume that one of the two antennas is a directional antenna. For this example, the source of the signal 405 is from a particular direction. Using the orientation information measured by the inertial sensor 470, the directional antenna of the wireless unit 400 is selected to radiate and receive signal from the desired direction of the source, maximizing the antenna gain. In another example, if signals are received from both terrestrial pseudolite sources and satellite sources, selection between two antennas (for example, a directional antenna and a hemispheric antenna) can be made based on the orientation of the wireless unit 400 as measured by the inertial sensor 470. One skilled in the art would understand that the combination of the types of antenna is numerous and its choice would depend on the design of the system and the system application.

In one aspect, a conditioning circuit 460 is used to transduce measurements from the inertial sensor 470 to a form compatible with the processor 450. For example, the output of the inertial sensor 470 may be in an analog format. The conditioning circuit 460 converts the analog data format to a digital data format for input into the processor 450. In another example the output of the inertial sensor 470 is amplified in the conditioning circuit 460 to a signal level that is acceptable for input into the processor 450. One skilled in the art would understand that different conditioning circuits with different transducing properties may be used based on the choice of inertial sensor and the processor. Also, in some aspects, a conditioning circuit may not be needed.

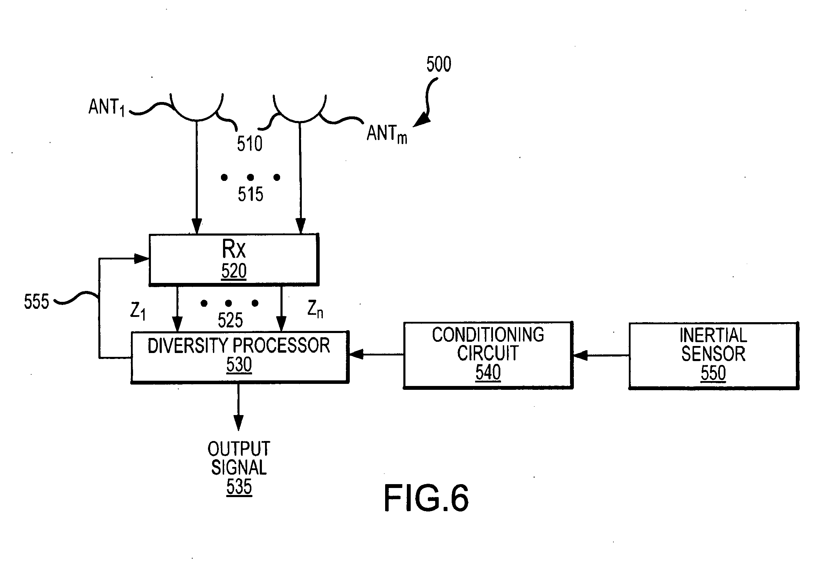

Fig. 6 is an illustration of an embodiment of a wireless unit 500 with diversity reception capability. As illustrated in Fig. 6, the wireless unit 500 includes at least m antennas (Ant₁ ... Antₘ). In one example, the quantity m equals 2. Other quantities of antennas where m > 2 may be desirable depending on the system parameters. The wireless unit 500 also includes a multi-channel receiver 520 to receive a plurality of signals 515 and to convert the plurality of signals 515 into received formats. In one aspect, the multi-channel receiver 520 includes one or more of the following components for processing the plurality of signals 515: a bandpass filter, a low noise amplifier (LNA), a mixer, local oscillator (LO), a low pass filter, an analog to digital converter, etc. One skilled in the art would understand that other aspects of a multi-channel receiver are well known and would not change the scope of the present disclosure.

The receiver outputs (Z₁ ... Zₙ) 525 of the multi-channel receiver 520 are inputted into a diversity processor 530. The diversity processor 530 processes the receiver outputs (Z₁ ... Zₙ) 525 into an output signal 535. In one aspect, the output signal 535 is further digitally processed to suit the system application. One skilled in the art would understand that the quantity of receiver outputs (Z₁ ... Zₙ) 525 corresponds to the quantity of active antennas 510 (Ant₁ .... Antₘ). In this case, n = m. However, in one aspect, the quantity of receiver outputs n is less than the quantity of antennas implemented m, i.e., n < m. For example, one implementation could include one receiver and two antennas to choose from. Additionally, in one aspect, n > m. One skilled in the art would understand that the implementation of a multi-channel receiver could vary without affecting functionality. For example, a receiver with multi-channel capabilities could be implemented with multiple single channel receivers without affecting functionality.

In one aspect, the diversity processor 530 computes the weighted average of the receiver outputs (Z₁ ... Zₙ) 525 and outputs an output signal 535 representative of that weighted average. In one example, the output signal 535 (labeled here as Y) is defined as

Y = Σ Wᵢ Zᵢ

where i = 1 .... n
In the case where n=1, there is no diversity combining. One skilled in the art would understand that many other examples of diversity processing are well known and the particular choice of a diversity processing is based on the particulars of the system design. In one aspect, the receiver outputs (Z₁ ... Zₙ) 525 are coherently combined with their phase offset from each other estimated. In another aspect, the receiver outputs (Z₁ ... Zₙ) 525 are non-coherently combined. In one aspect, an antenna selection input 555 from the diversity processor 530 is received by the multi-channel receiver 520 to implement selection of which antennas 510 (Ant₁ .... Antₘ) to use. The antenna selection input 555 is based on results measured by the inertial sensor 550.

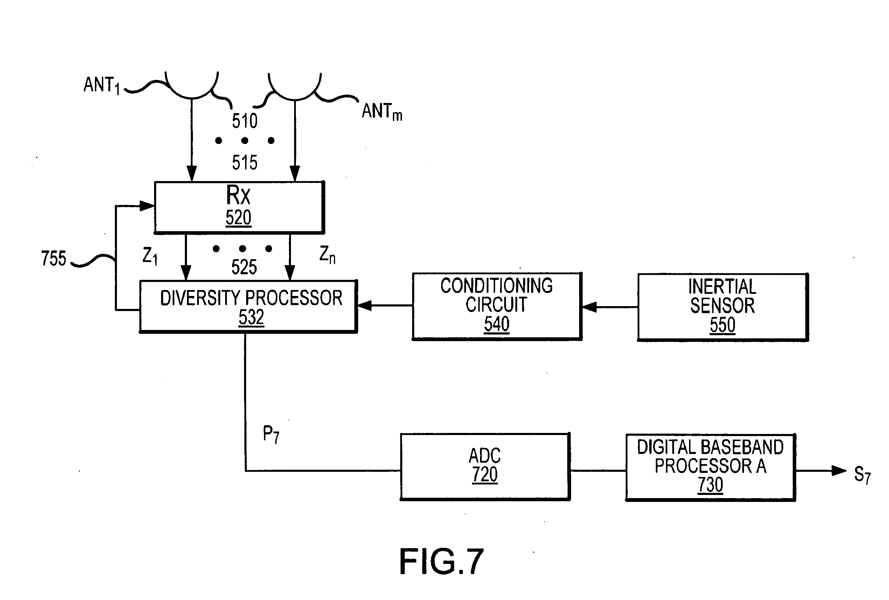

Fig. 7 is a block diagram of an aspect of the wireless unit with baseband processing capability. In one aspect, the diversity processor is in analog format and includes an analog phase rotator and diversity combiner. Following the analog diversity processor 532 (shown in Fig. 7), the output P₇ is converted from analog format to digital format by ADC 720 and then processed by the digital baseband processor A 730 to output a baseband signal S₇. In one aspect, the ADC 720 includes a sampler and a quantizer to convert the analog format input to digital format. In one aspect, the digital baseband processor A 730 performs phase rotation, despreading, coherent accumulation and non-coherent accumulation to recover the baseband signal S₇. In one aspect, an antenna selection input 755 from the diversity processor 532 is received by the multi-channel receiver 520 to implement selection of which antennas 510 (Ant₁ .... Antₘ) to use. The antenna selection input 755 is based on results measured by the inertial sensor 550.

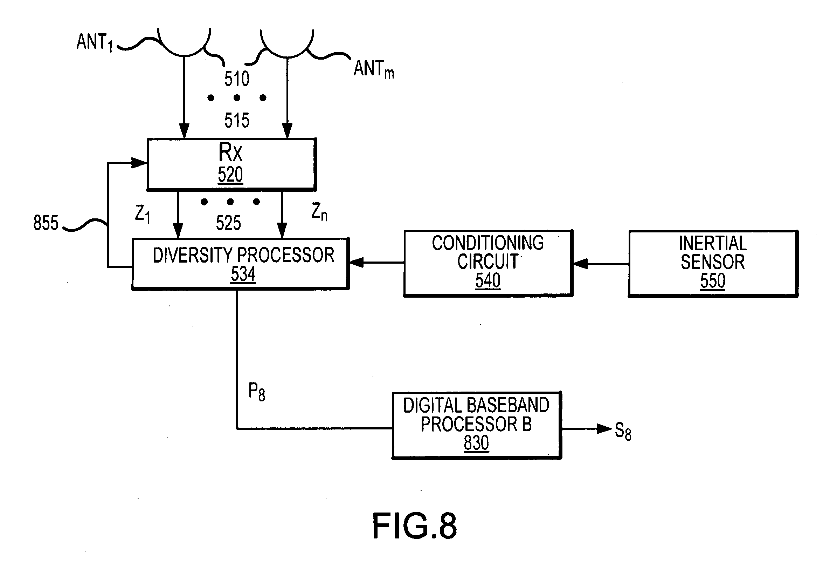

Fig. 8 is a block diagram of a second aspect of the wireless unit with baseband processing capability. Shown in Fig. 8, the diversity processor 534 is in digital format and performs coherent sampling and diversity combining on the receiver outputs (Z₁ ... Zₙ) 525. In another aspect, the coherent sampling may be performed by a separate unit (not shown) coupled to the diversity processor 534. One skilled in the art would understand that there are various implementations known which can be employed without affecting the scope of the disclosure. In one aspect, the digital baseband processor B 830 performs phase rotation, despreading, coherent accumulation and non-coherent accumulation on the output P₈ to recover the baseband signal S₈. In one aspect, an antenna selection input 855 from the diversity processor 534 is received by the multi-channel receiver 520 to implement selection of which antennas 510 (Ant₁ .... Antₘ) to use. The antenna selection input 855 is based on results measured by the inertial sensor 550.

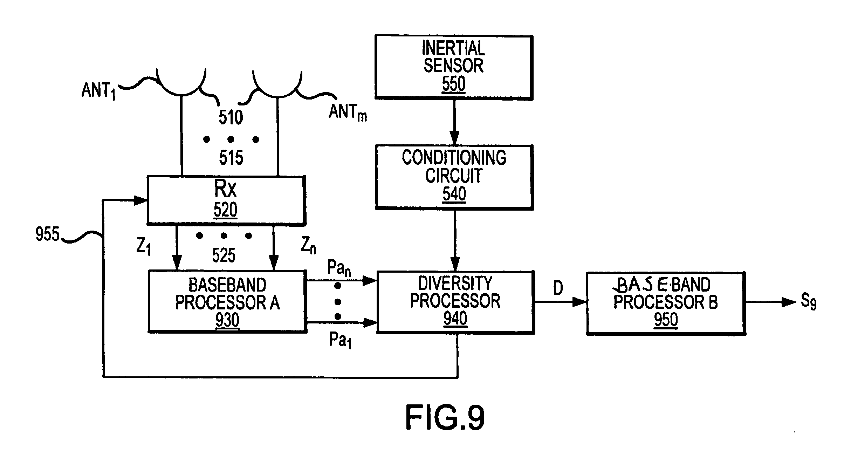

Fig. 9 is a block diagram of a third aspect of a wireless unit with baseband processing capability. In one aspect, the diversity processor 940 is in digital format. Baseband processor A 930 receives receiver outputs (Z₁ ... Zₙ) 525 for baseband processing, and outputs processor A outputs (Pa₁ ... Paₙ) which are inputted to the diversity processor 940. The diversity processor output D from the diversity processor 940 is then inputted to baseband processor B 950 for further processing to recover baseband signal S₉. One skilled in the art would understand that baseband processor A 930 and baseband processor B 950 can be implemented either by a single processor unit or by separate processor units. In one aspect, baseband processor A 930, diversity processor 940 and baseband processor B 950 are all implemented by a single processor unit.

In one aspect, the baseband processing performed by the baseband processor A 930 includes phase rotation, despreading and coherent accumulation of each receiver outputs (Z₁ ... Zₙ) 525. Shown in Fig. 9, processor A outputs (Pa₁ ... Paₙ) are inputted into the diversity processor 940. In one aspect, the diversity processing performed by the diversity processor 940 includes accumulating the processor A outputs (Pa₁ ... Paₙ) and diversity combining them. In one aspect, the diversity processor 940 coherently accumulates the processor A outputs (Pa₁ ... Paₙ). The diversity processor output D is inputted to baseband processor B 950. In one aspect, processor B 950 performs further coherent accumulation and non-coherent accumulation to recover baseband signal S₉. One skilled in the art would understand that the quantity of processor A outputs (Pa₁ ... Paₙ) corresponds to the quantity of receiver outputs (Z₁ ... Zₙ) 525. In one aspect, an antenna selection input 955 from the diversity processor 940 is received by the multi-channel receiver 520 to implement selection of which antennas 510 (Ant₁ .... Antₘ) to use. The antenna selection input 955 is based on results measured by the inertial sensor 550.

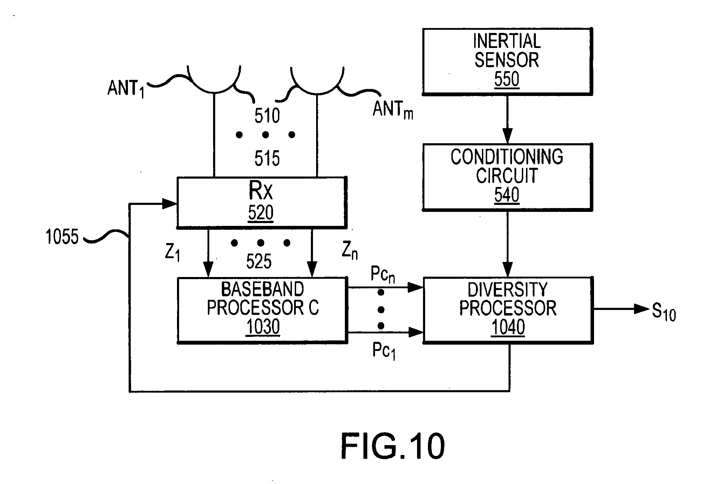

Fig. 10 is a block diagram of a fourth aspect of a wireless unit with baseband processing capability. In one aspect, the diversity combining is done non-coherently. In Fig. 10, the receiver outputs (Z₁ ... Zₙ) 525 are inputted into baseband processor C 1030. Baseband processor C 1030 phase rotates, despreads, coherently accumulates and non-coherently accumulates the receiver outputs (Z₁ ... Zₙ) 525 to generate processor C outputs (Pc₁ ... Pcₙ). Processor C outputs (Pc₁ ... Pcₙ) are then inputted to the diversity processor 1040 which non-coherently accumulates the processor C outputs (Pc₁ ... Pcₙ) and non-coherently diversity combines them to recover baseband signal S₁₀. One skilled in the art would understand that baseband processor C 1030 and diversity processor 1040 can be implemented either by a single processor unit or by separate processor units. In one aspect, an antenna selection input 1055 from the diversity processor 1040 is received by the multi-channel receiver 520 to implement selection of which antennas 510 (Ant₁ .... Antₘ) to use. The antenna selection input 1055 is based on results measured by the inertial sensor 550.

As shown in Figs. 6 to 10, the wireless unit includes an inertial sensor 550 that measures and/or observes the orientation of the wireless unit in an inertial reference frame. Examples of inertial sensors include accelerometers, quartz sensors, gyros, etc. Based on the measured orientation of the wireless unit, orientation information is generated by the inertial sensor and inputted into the diversity processor.

In one aspect, the orientation information affects how the diversity processor processes and combines its inputs. For example, depending on the orientation of the wireless unit relative to one or more of the signal sources (which is embedded in the orientation information), different weighting coefficients may be applied to one or more of the inputs. In the aspects shown in Figs. 6-8, the inputs to the diversity processor 530, 532, 534 are receiver outputs (Z₁ ... Zₙ) 525. In the aspect shown in Fig. 9, the inputs to the diversity processor 940 are processor A outputs (Pa₁ ... Paₙ). And, in the aspect shown in Fig. 10, the inputs to the diversity processor 1040 are processor C outputs (Pc₁ ... Pcₙ).

In another aspect, the orientation information affects the selection of antennas 510 (Ant₁ .... Antₘ) to use as implemented by the antenna selection input.

In one aspect, a conditioning circuit 540 is provided to transduce measurements from the inertial sensor 550 into a form compatible with the diversity processor. For example, the output of the inertial sensor 550 may be in an analog format. The conditioning circuit 540 converts the analog data format to a digital data format for input into the diversity processor. In another example the output of the inertial sensor 550 is amplified in the conditioning circuit 540 to a signal level that is appropriate for input into the diversity processor. One skilled in the art would understand that different conditioning circuits with different transducing properties may be selected based on the choice of inertial sensor and the processor.

The various illustrative logical blocks, modules, and circuits described herein may be implemented or performed with one or more processors. A processor may be a general purpose processor, such as a microprocessor, a specific application processor, such a digital signal processor (DSP), or any other hardware platform capable of supporting software. Software shall be construed broadly to mean any combination of instructions, data structures, or program code, whether referred to as software, firmware, middleware, microcode, or any other terminology. Alternatively, a processor may be an application specific integrated circuit (ASIC), a programmable logic device (PLD), a field programmable gate array (FPGA), a controller, a micro-controller, a state machine, a combination of discrete hardware components, or any combination thereof. The various illustrative logical blocks, modules, and circuits described herein may also include machine readable medium for storing software, such as a hard disk, flash drive, or computer memory. The machine readable medium may also include one or more storage devices, a transmission line, or a carrier wave that encodes a data signal.

The previous description of the disclosed aspects is provided to enable any person skilled in the art to make or use the present invention. Various modifications to these aspects will be readily apparent to those skilled in the art, and the generic principles defined herein may be applied to other aspects without departing from the scope of the invention as defined in the appended claims.

## Claims

1. A wireless unit (400, 500) for implementing antenna selection comprising:
a plurality of antennas (410, 510) adapted for receiving a signal, wherein the plurality of antennas comprises an isotropic antenna and a hemispheric antenna and wherein the signal comprises a Global Navigation Satellite System, GNSS, signal; wherein said isotropic antenna has an antenna gain pattern that is approximately isotropic perpendicular to the central axis of the antenna, and the hemispherical antenna has such an antenna gain pattern that is substantially confined to the upper hemisphere of a sphere, wherein the hemispherical antenna has a gain that is greater than that for the isotropic antenna
an antenna selector (430, 520) adapted for selecting one or more antennas from the plurality of antennas;
an inertial sensor (470, 550) adapted for sensing an orientation of the wireless unit and generating orientation information responsive thereto; and
a processor (450, 530) adapted for processing the orientation information and commanding the antenna selector to select one or more antennas from the plurality of antennas responsive to the orientation information for receiving the signal.

2. The wireless unit (400) of claim 1 wherein the plurality of antennas (410) includes or is implemented by one or more dual-polarized antennas.

3. The wireless unit (400) of claim 1 further comprising a receiver (440) for receiving the signal from one of the plurality of antennas.

4. The wireless unit (400) of claim 1 or 3 wherein the plurality of antennas is two.

5. The wireless unit (400) of claim 3 wherein the receiver (440) comprises a multi-channel receiver.

6. The wireless unit (400) of claim 1 further comprising a plurality of receivers for receiving the signal from the plurality of antennas, and wherein the plurality of antennas is greater than the plurality of receivers.

7. The wireless unit (400) of claim 1 further comprising a plurality of receivers for receiving the signal from the plurality of antennas, and wherein the plurality of antennas is equal to the plurality of receivers.

8. The wireless unit (400) of claim 1 wherein the inertial sensor comprises an accelerometer.

9. The wireless unit (500) of claim 1 for implementing receive diversity further comprising:
said plurality of antennas (510) for receiving a plurality of signals;
at least one receiver (520) coupled to the plurality of antennas for converting the plurality of signals into a plurality of receiver outputs;
a diversity processor (530) coupled to the at least one receiver for performing diversity processing on the plurality of receiver outputs; and
said inertial sensor (550) coupled to the diversity processor for sensing said orientation and generating said orientation information of said wireless device to input to the diversity processor, wherein the orientation information affects the diversity processing on the plurality of receiver outputs.

10. The wireless unit (500) of claim 9 wherein the diversity processor performs a weighted average processing on the plurality of receiver outputs.

11. The wireless unit (500) of claim 9 wherein the diversity processor is in analog format and includes an analog phase rotator and diversity combiner.

12. The wireless unit (500) of claim 11 further comprising a digital baseband processor coupled to the diversity processor for performing phase rotation and despreading to recover a baseband signal.

13. The wireless unit of claim 1 for implementing receive diversity further comprising:
said plurality of antennas for receiving a plurality of signals;
at least one receiver coupled to the plurality of antennas for converting the plurality of signals into a plurality of receiver outputs;
a first baseband processor (930) coupled to the at least one receiver for performing baseband processing on the plurality of receiver outputs and generating a plurality of processor outputs;
a diversity processor (940) coupled to the first baseband processor for performing diversity processing on the plurality of processor outputs to recover a baseband signal; and
said inertial sensor coupled to the diversity processor for sensing said orientation of the wireless unit and generating said orientation information to input to the diversity processor, wherein the orientation information affects the diversity processing on the plurality of processor outputs.

14. A method for implementing antenna selection comprising:
sensing an orientation of a wireless unit (400, 500);
generating orientation information based on the orientation of the wireless unit;
processing the orientation information to command an antenna selector (430) to select from a plurality of antennas, wherein the plurality of antennas comprises an isotropic antenna and a hemispheric antenna, wherein said isotropic antenna has an antenna gain pattern that is approximately isotropic perpendicular to the central axis of the antenna, and the hemispherical antenna has such an antenna gain pattern that is substantially confined to the upper hemisphere of a sphere, wherein the hemispherical antenna has a gain that is greater than that for the isotropic antenna; and
using the selected antenna to receive a signal, wherein the signal comprises a Global Navigation Satellite System, GNSS, signal.

15. The method of claim 14 for implementing receive diversity in a wireless unit (500), said method further comprising:
receiving a plurality of signals including said signal of claim 14;
providing a plurality of receiver outputs;
sensing an orientation of the wireless unit; and
performing diversity processing on the plurality of receiver outputs, wherein the orientation information affects the diversity processing on the plurality of receiver outputs.

## Patentansprüche

1. Eine Drahtloseinheit (400, 500) zum Implementieren einer Antennenauswahl, die Folgendes aufweist:
eine Vielzahl von Antennen (410, 510), die ausgelegt ist zum Empfangen eines Signals, wobei die Vielzahl von Antennen eine isotrope Antenne und eine hemisphärische bzw. halbkugelförmige Antenne aufweist, und wobei das Signal ein Globales-Navigationssatellitensystem-Signal bzw. GNSS-Signal (GNSS = Global Navigation Satellite System) aufweist; wobei die isotrope Antenne ein Antennenverstärkungsmuster aufweist, das näherungsweise isotrop quer zur zentralen Achse der Antenne ist, und wobei die hemisphärische Antenne ein solches Verstärkungsmuster hat, das im Wesentlchen auf die obere Halbkugel einer Kugel beschränkt ist, wobei die hemisphärische Antenne eine Verstärkung hat, die größer ist als die für die isotrope Antenne,
ein Antennenauswahlelement (430, 520), das ausgelegt ist zum Auswählen einer oder mehrerer Antennen aus der Vielzahl von Antennen;
einen Inertialsensor (470, 550), der ausgelegt ist zum Abfühlen einer Ausrichtung der Drahtloseinheit und zum Generieren von Ausrichtungsinformation ansprechend darauf; und
einen Prozessor (450, 530), der ausgelegt ist zum Verarbeiten der Orientierungsinformation und zum Anweisen des Antennenauswahlelements, eine oder mehrere Antennen aus der Vielzahl von Antennen ansprechend auf die Ausrichtungsinformation zum Empfangen des Signals auszuwählen.

2. Drahtloseinheit (400) nach Anspruch 1, wobei die Vielzahl von Antennen (410) eine oder mehrere dual-polarisierte Antennen beinhaltet oder durch diese implementiert wird.

3. Drahtloseinheit (400) nach Anspruch 1, die weiter einen Empfänger (440) zum Empfangen des Signals von einer der Vielzahl von Antennen aufweist.

4. Drahtloseinheit (400) nach Anspruch 1 oder 3, wobei die Vielzahl von Antennen Zwei ist.

5. Drahtloseinheit (400) nach Anspruch 3, wobei der Empfänger (440) einen Multikanalempfänger aufweist.

6. Drahtloseinheit (400) nach Anspruch 1, die weiter eine Vielzahl von Empfängern zum Empfangen des Signals von der Vielzahl von Antennen aufweist, und wobei die Vielzahl von Antennen größer ist als die Vielzahl von Empfängern.

7. Drahtloseinheit (400) nach Anspruch 1, die weiter eine Vielzahl von Empfängern zum Empfangen des Signals von der Vielzahl von Antennen aufweist, und wobei die Vielzahl von Antennen gleich der Vielzahl von Empfängern ist.

8. Drahtloseinheit (400) nach Anspruch 1, wobei der Inertialsensor einen Beschleunigungsmesser aufweist.

9. Drahtloseinheit (500) nach Anspruch 1 zum Implementieren von Empfangsdiversität, die weiter Folgendes aufweist:
die Vielzahl von Antennen (510) zum Empfangen einer Vielzahl von Signalen;
wenigstens einen Empfänger (520), der an die Vielzahl von Antennen gekoppelt ist, zum Konvertieren der Vielzahl von Signalen in eine Vielzahl von Empfängerausgaben;
einen Diversitätsprozessor (530), der an den wenigstens einen Empfänger gekoppelt ist, zum Durchführen von Diversitätsverarbeitung an der Vielzahl von Empfängerausgaben; und
den Inertialsensor (550), der an den Diversitätsprozessor gekoppelt ist, zum Abfühlen der Ausrichtung und zum Generieren der Ausrichtungsinformation der Drahtloseinrichtung als Eingabe an den Diversitätsprozessor, wobei die Ausrichtungsinformation die Diversitätsverarbeitung der Vielzahl von Empfängerausgaben beeinflusst.

10. Drahtloseinheit (500) nach Anspruch 9, wobei der Diversitätsprozessor eine gewichtete Durchschnittsverarbeitung auf der Vielzahl von Empfängerausgaben durchführt.

11. Drahtloseinheit (500) nach Anspruch 9, wobei der Diversitätsprozessor in einem analogen Format ist und ein Analogphasenrotationselement und ein-Diversitätskombinationselement beinhaltet.

12. Drahtloseinheit (500) nach Anspruch 11, die weiter einen digitalen Basisbandprozessor aufweist, der an den Diversitätsprozessor gekoppelt ist zum Durchführen von Phasenrotation und zum Entspreizen, um das Basisbandsignal wiederzuerlangen.

13. Drahtloseinheit nach Anspruch 1 zum Implementieren von Empfangsdiversität, die weiter Folgendes aufweist:
die Vielzahl von Antennen zum Empfangen einer Vielzahl von Signalen; wenigstens einen Empfänger, der an die Vielzahl von Antennen gekoppelt ist, zum Konvertieren der Vielzahl von Signalen in eine Vielzahl von Empfängerausgaben;
einen ersten Basisbandprozessor (930), der an wenigstens einen Empfänger gekoppelt ist, zum Durchführen von Basisbandverarbeitung an der Vielzahl von Empfängerausgaben und zum Generieren einer Vielzahl von Prozessorausgaben;
einen Diversitätsprozessor (940), der an den ersten Basisbandprozessor gekoppelt ist, zum Durchführen von Diversitätsverarbeitung an der Vielzahl von Prozessorausgaben, um ein Basisbandsignal wiederzuerlangen; und
wobei der Inertialsensor an den Diversitätsprozessor gekoppelt ist zum Abfühlen der Ausrichtung der Drahtloseinheit und zum Generieren der Ausrichtungsinformation als Eingabe an den Diversitätsprozessor, wobei die Ausrichtungsinformation die Diversitätsverarbeitung auf der Vielzahl von Prozessorausgaben beeinflusst.

14. Ein Verfahren zum Implementieren einer Antennenauswahl, das Folgendes aufweist:
Abfühlen einer Ausrichtung einer Drahtloseinheit (400, 500);
Generieren von Ausrichtungsinformation basierend auf der Ausrichtung der Drahtloseinheit;
Verarbeiten der Ausrichtungsinformation, um ein Antennenauswahlelement (430) anzuweisen, aus einer Vielzahl von Antennen auszuwählen, wobei die Vielzahl von Antennen eine isotrope Antenne und eine halbkugelförmige bzw. hemisphärische Antenne aufweist, wobei die isotrope Antenne ein Antennenverstärkungsmuster hat, das näherungsweise isotrop quer zur zentralen Achse der Antenne ist, und die hemisphärische Antenne ein solches Antennenverstärkungsmuster hat, das im Wesentlichen auf die obere Halbkugel einer Kugel beschränkt ist, wobei die hemisphärische Antenne eine Verstärkung hat, die größer ist als jene für die isotrope Antenne; und
Verwenden der ausgewählten Antenne zum Empfangen eines Signals, wobei das Signal ein Globales-Navigationssatellitensystem-Signal bzw GNSS-Signal (GNSS = Global Navigation Satellite System) aufweist.

15. Verfahren nach Anspruch 14 zum Implementieren von Empfangsdiversität in einer Drahtloseinheit (500), wobei das Verfahren weiter Folgendes aufweist:
Empfangen einer Vielzahl von Signalen, einschließlich des Signals nach Anspruch 14;
Vorsehen einer Vielzahl von Empfängerausgaben;
Abfühlen einer Ausrichtung der Drahtloseinheit; und
Durchführen von Diversitätsverarbeitung an der Vielzahl von Empfängerausgaben, wobei die Ausrichtungsinformation die Diversitätsverarbeitung an der Vielzahl von Empfängerausgaben beeinflusst.

## Revendications

1. Appareil sans fil (400, 500) pour mettre en oeuvre une sélection d'antennes, comprenant :
une pluralité d'antennes (410, 510) adaptées pour recevoir un signal, la pluralité d'antennes comprenant une antenne isotrope et une antenne hémisphérique, et le signal comprenant un signal de Système Global de Navigation par Satellites, GNSS ; l'antenne isotrope ayant un diagramme de gain d'antenne qui est approximativement isotrope et perpendiculaire à l'axe central de l'antenne, et l'antenne hémisphérique ayant un diagramme de gain d'antenne qui est sensiblement confiné dans l'hémisphère supérieur d'une sphère, l'antenne hémisphérique ayant un gain supérieur à celui de l'antenne isotrope ;
un sélecteur d'antennes (430, 520) adapté pour sélectionner une ou plusieurs antennes parmi la pluralité d'antennes ;
un capteur inertiel (470, 550) adapté pour détecter l'orientation de l'appareil sans fil et générer en réponse des informations d'orientation ; et
un processeur (450, 530) adapté pour traiter les informations d'orientation et commander le sélecteur d'antennes pour sélectionner une ou plusieurs antennes parmi la pluralité d'antennes en réponse aux informations d'orientation pour recevoir le signal.

2. Appareil sans fil (400) selon la revendication 1, dans lequel la pluralité d'antennes (410) comprend ou est mise en oeuvre par une ou plusieurs antennes à double polarisation.

3. Appareil sans fil (400) selon la revendication 1, comprenant en outre un récepteur (440) pour recevoir le signal provenant de l'une de la pluralité d'antennes.

4. Appareil sans fil (400) selon la revendication 1 ou 3, dans lequel la pluralité d'antennes est au nombre de deux.

5. Appareil sans fil (400) selon la revendication 3, dans lequel le récepteur (440) comprend un récepteur multicanal.

6. Appareil sans fil (400) selon la revendication 1, comprenant en outre une pluralité de récepteurs pour recevoir le signal provenant de la pluralité d'antennes, et dans lequel le nombre d'antennes est plus grand que le nombre de récepteurs.

7. Appareil sans fil (400) selon la revendication 1, comprenant en outre une pluralité de récepteurs pour recevoir le signal provenant de la pluralité d'antennes, et dans lequel le nombre d'antennes est égale au nombre de récepteurs.

8. Appareil sans fil (400) selon la revendication 1, dans lequel le capteur inertiel comprend un accéléromètre.

9. Appareil sans fil (500) selon la revendication 1 pour mettre en oeuvre une diversité en réception, comprenant en outre :
ladite pluralité d'antennes (510) pour recevoir une pluralité de signaux ;
au moins un récepteur (520) couplé à la pluralité d'antennes pour convertir la pluralité de signaux en une pluralité de sorties de récepteur ;
un processeur de diversité (530) couplé audit au moins un récepteur pour réaliser un traitement en diversité sur la pluralité de sorties de récepteur ; et
ledit capteur inertiel (550) couplé au processeur de diversité pour détecter ladite orientation et générer les informations d'orientation du dispositif sans fil à fournir au processeur de diversité, dans lequel les informations d'orientation affectent le traitement en diversité sur la pluralité de sorties de récepteur.

10. Appareil sans fil (500) selon la revendication 9, dans lequel le processeur de diversité réalise un traitement de moyenne pondérée sur la pluralité de sorties de récepteur.

11. Appareil sans fil (500) selon la revendication 9, dans lequel le processeur de diversité est d'un format analogique et comprend un rotateur de phase analogique et un combinateur en diversité.

12. Appareil sans fil (500) selon la revendication 11, comprenant en outre un processeur de bande de base numérique couplé au processeur de diversité pour réaliser une rotation de phase et un désétalement pour récupérer un signal de bande de base.

13. Appareil sans fil selon la revendication 1 pour mettre en oeuvre une diversité en réception, comprenant en outre :
ladite pluralité d'antennes pour recevoir une pluralité de signaux ;
au moins un récepteur couplé à la pluralité d'antennes pour convertir la pluralité de signaux en une pluralité de sorties de récepteur ;
un premier processeur de bande de base (930) couplé audit au moins un récepteur pour réaliser un traitement de bande de base sur la pluralité de sorties de récepteur et générer une pluralité de sorties de processeur ;
un processeur de diversité (940) couplé au premier processeur de bande de base pour réaliser un traitement en diversité sur la pluralité de sorties de processeur pour récupérer un signal de bande de base ; et
un capteur inertiel couplé au processeur de diversité pour détecter l'orientation de l'appareil sans fil et générer les informations d'orientation à fournir au processeur de diversité, dans lequel les informations d'orientation affectent le traitement en diversité sur la pluralité de sorties de processeur.

14. Procédé pour mettre en oeuvre une sélection d'antenne, comprenant les étapes suivantes :
détecter l'orientation d'un appareil sans fil (400, 500) ;
générer des informations d'orientation sur la base de l'orientation de l'appareil sans fil ;
traiter les informations d'orientation pour commander un sélecteur d'antenne (430) pour faire une sélection parmi une pluralité d'antennes, la pluralité d'antennes comprenant une antenne isotrope et une antenne hémisphérique, l'antenne isotrope ayant un diagramme de gain d'antenne qui est approximativement isotrope et perpendiculaire à l'axe central de l'antenne, et l'antenne hémisphérique ayant un diagramme de gain d'antenne sensiblement confiné à l'hémisphère supérieur d'une sphère, l'antenne hémisphérique ayant un gain supérieur à celui de l'antenne isotrope ; et
utiliser l'antenne sélectionnée pour recevoir un signal, le signal comprenant un signal de Système Global de Navigation par Satellites, GNSS.

15. Procédé selon la revendication 14, pour mettre en oeuvre une diversité en réception dans un appareil sans fil (500), le procédé comprenant en outre les étapes suivantes :
recevoir une pluralité de signaux comprenant le signal de la revendication 14 ;
fournir une pluralité de sorties de récepteur ;
détecter l'orientation de l'appareil sans fil ; et
réaliser un traitement en diversité sur la pluralité de sorties de récepteur, les informations d'orientation affectant le traitement en diversité sur la pluralité de sorties de récepteur.
